# EUROPEAN PATENT SPECIFICATION

(11) **EP 4 096 889 B1**
(45) Date of publication and mention of the grant of the patent: **07.08.2024**
(21) Application number: 21702951.1
(22) Date of filing: 29.01.2021
(51) Int. Cl.: B29B 7/24, B29B 7/28, B29B 7/94, B29B 7/18, B29B 7/74

(54) **LIQUID DOSING SYSTEM WITH CONTROL OF THE DOSED QUANTITY, AND RELATED DOSING PROCESSING**
FLÜSSIGKEITSDOSIERSYSTEM MIT REGELUNG DER DOSIERTEN MENGE, UND ZUGEHÖRIGE DOSIERVERARBEITUNG
SYSTÈME DE DOSAGE DE LIQUIDE ASSOCIÉ À LA RÉGULATION DE LA QUANTITÉ DOSÉE, ET TRAITEMENT DE DOSAGE ASSOCIÉ

(30) Priority: 30.01.2020 FR 2000919
(43) Date of publication of application: 07.12.2022
(73) Proprietor: COMPAGNIE GENERALE DES ETABLISSEMENTS MICHELIN, 63000 Clermont-Ferrand (FR)
(72) Inventor: LE BARS, Lionel, 63040 CLERMONT-FERRAND Cedex 9 (FR); PIERRAT, Sébastien, 63040 CLERMONT-FERRAND Cedex 9 (FR)
(74) Representative: M.F.P. Michelin
(86) International application number: PCT/EP2021/052167
(87) International publication number: WO 2021/152133

(56) References cited:
- CN-A- 106 915 000
- CN-U- 202 974 399
- DE-A1- 3 720 975
- DE-T5- 112013 003 721
- US-A- 5 297 865
- US-A- 5 676 461
- US-A1- 2014 160 878

## Description

### Technical Field

The invention relates to a dosing system that allows a mass control of a quantity of dosed liquid products introduced into a rubber mixture, and to a related dosing cycle performed by said dosing system.

### Background

In the field of rubber mixture manufacturing, Banbury type batch-type internal mixers (and their equivalents) are well known for making rubber mixtures. During a mixing cycle carried out by the internal mixer, the various raw materials can be fed into the mixer. Raw materials include the materials necessary to make a product obtained from a mixing cycle, including, without limitation, an elastomeric material (e.g., natural rubber, synthetic elastomer and combinations and equivalents thereof) and one or more ingredients, such as one or more processing agents, protective agents, reinforcing fillers and/or cross-linking or vulcanizing agents. All ingredients are introduced in varying quantities depending upon the desired performance of the products obtained from the mixing cycles (e.g., tires).

Depending on the formulas of the rubber mixtures, liquid products are required to attain the desired mixture. Raw materials may therefore also include one or more liquid products including, but not limited to, silane, antioxidants (e.g. 6PPD), wax and stearic acid. A specific amount of these liquid products is injected into the in-process mixture. In order to perform these dosages, syringe-type systems exist in the context of an automated product dosing system (or "liquid dosing system" or "LDS"). Examples of such systems are offered, for example, by Zeppelin Systems (https://www.zeppelin-systems.com/videos.html), B&K Wäge & Anlagentechnik (http://www.bk-anlagentechnik.de/www/EN/Produktbereiche/Fluessigkeitssysteme/zylinder-dosiersysteme.html) and APEC (https://www.apecusa.com/products/liquid-dosing-system).

Other examples are disclosed, for example, of the type described in the Applicant's application FR1911828. Other known dosing solutions consist of a pump associated with a measuring means such as a Coriolis mass flow meter (see, for example, the systems disclosed by publications CN202974399, US5676461 and DE3720975).

In order to ensure that the constituents of a chosen mixing recipe are introduced into the mixer in precise and regular quantities, it is desirable that most of them are reliably introduced into the interior of the mixer. For this reason, gravitational incorporation is avoided, especially in cases where a fraction of the constituents may not reach the interior of the mixer. In order to guarantee, by controlling the mixing process, that all the intended constituents are actually part of the manufactured composition, it is desirable that, immediately after dosing, the constituents remain confined in an enclosure (e.g., a pipe) until they reach the mixer. Volumetric pumping is particularly suitable for the forced introduction of the constituents. Therefore, the disclosed invention doses a precise quantity of liquid products to be injected into a rubber mixture during its manufacture.

### Summary of the invention

The invention relates to a dosing system according to claim 1 that effects a mass control of a dosed quantity of liquid product introduced into a chamber of an internal mixer that carries out rubber mixing processes, the dosing system includes:
- at least one reservoir that stores a liquid product between a minimum and a maximum level wherein a sensor controls the level of liquid product arriving at the reservoir (12) between the minimum level (N_{MIN}) and the maximum level (N_{MAX}) therein;
- at least one product conduit of a predetermined diameter that conveys a dosed amount of liquid product from the reservoir to the internal mixer;
- a dosing means that directly measures a mass and density of a liquid product dosed from the reservoir and transported to the internal mixer, the dosing means including:
   - at least one pump disposed downstream of the tank, the pump having a variable speed according to an intended liquid product dosage; and
   - a mass flow meter located downstream of the pump;
   - a mixing injector disposed downstream of the dosing means for introducing liquid products of a mixed rubber mixture into a chamber of the internal mixer in which the mixing injector is mounted, with a first switching valve that directs a liquid product measured by the dosing means to the mixing injector;
   - a pressure sensor installed downstream of the dosing means to detect the pressure of a dosing circuit including the product conduit, the reservoir, the dosing means and the mixing injector and
   - a non-return valve (22) installed upstream of the dosing means in order to maintain the dosing system under pressure at the end of a dosing cycle carried out by the dosing system; the dosing system (10) is characterized in that :
      - at least one conveyance conduit (14) that conveys the liquid product from a source of the liquid product corresponding to the reservoir (12), the conveyance conduit (14) terminating at an outlet (14a) that descends below the minimum level (N_{MIN}) of liquid product stored in the reservoir (12).

In a preferred embodiment, the dosing system also includes:
- a sampling injector that is part of the dosing circuit and that is arranged downstream of the dosing means in order to take mass samples of the measured liquid product; and
- a second switching valve that directs the measured liquid product to the sampling injector.

In a further preferred embodiment, at least one of the mixing injector and the sampling injector includes a multi-channel injector.

In a further preferred embodiment, the mass flow meter includes a Coriolis type flow meter.

The invention also relates to a dosing cycle according to claim 6 carried out by the disclosed dosing system, including the following steps:
- a step of sensing a level of the liquid product arriving at the reservoir (12) to ensure that it is filled between a minimum level (N_{MIN}) and a maximum level (N_{MAX});
- a step of conveying a liquid product from the reservoir, during which an expected mass of liquid product is conveyed from the reservoir to the pump;
- a step of conveying the liquid product from the pump to the dosing means to directly measure the mass and density of the liquid product dosed to the reservoir;
- a step of detecting the pressure of the dosing circuit by the pressure sensor, this step includes the step of closing the non-return valve until the pressure sensor indicates no leakage; and
- a step of conveying measured liquid product from the dosing means to the mixing injector in order to introduce the measured liquid products into the internal mixer.

In a preferred embodiment of the dosing cycle, the dosing cycle also includes a step of comparing data obtained from the dosing means with target values of mass and density of the measured liquid product.

In a further preferred embodiment of the dosing cycle, the dosing cycle also includes a step for sampling the measured liquid product.

In a further preferred embodiment of the dosing cycle, the steps of the dosing cycle are performed iteratively.

The invention also relates to a rubber mixing process according to claim 9 including the disclosed dosing cycle.

Other aspects of the invention will become clear upon reading the detailed description that follows.

### Brief Description of the Drawings

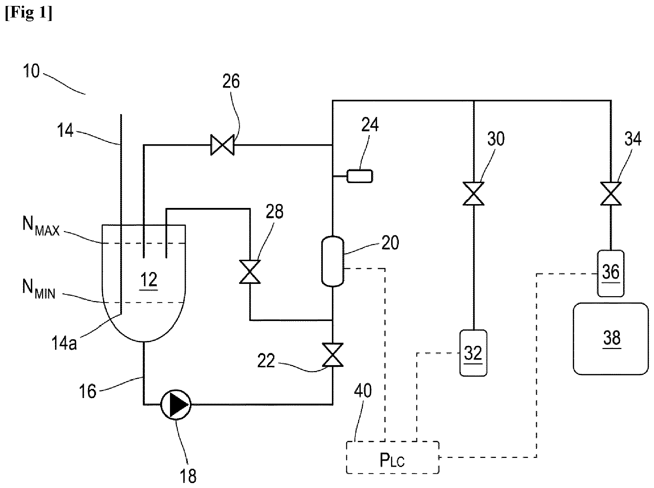

The nature and the various advantages of the invention will become clearer upon reading the detailed description that follows, in conjunction with the appended drawings, in which identical parts have been given the same reference numbers throughout, and in which: Figure 1 represents a schematic view of a liquid product dosing system of the invention.

### Detailed Description

Referring now to the figures, in which the same numbers identify identical elements, Figure 1 represents an embodiment of a dosing system for liquid products (or "dosing system" or "system") 10 of the invention. The dosing system 10 takes the form of a dosing circuit that carries out mass control of a dosed quantity of each liquid product introduced into a chamber of an internal mixer that carries out rubber mixing processes. The dosing system 10 is adapted to dose liquid products in combination with multi-channel injectors (not shown) capable of being mounted in internal mixers. By "multi-channel injector" is meant an injector incorporating at least two channels, each dedicated to a corresponding liquid product. It is understood that "multi-channel injector" refers to an injector that is capable of dosing at least two different liquid products into an internal mixer during a mixing cycle. It is understood that "internal mixer" (or "mixer" or "MI") means Banbury type mixers and their equivalents. It is understood that it is not mandatory to dispense all different liquid products at the same time. Any of the available liquid products can be dosed according to the selected rubber mixture recipe. It is also understood that the dosing of liquid products can be done either in a preferred order or simultaneously depending on the selected rubber mixture recipe.

The dosing system 10 includes at least one storage tank (or "reservoir") 12 that stores a liquid product (such as, silane, antioxidants (e.g., 6PPD), wax and stearic acid) Filling is accomplished using a conveyance conduit(s) 14 arranged in fluid communication with a source(s) of liquid product (not shown) and a corresponding reservoir(s) 12. As an example, Figure 1 shows an embodiment incorporating a conveyance conduit 14 that transports a liquid product from a liquid product source corresponding to an assigned reservoir 12. Each conveyance conduit 14 terminates at an outlet 14a that drops below a minimum level N_{MIN} of liquid product stored in the reservoir 12. This limits the generation of air bubbles during a filling cycle as compared to a system where filling is above the liquid level in the reservoir. The level of liquid product arriving at the reservoir 12 is controlled (for example, by one or more commercially available sensors) to ensure that it is filled between the minimum N_{MIN} level and a maximum level N_{MAX}.

The dosing system may incorporate optional temperature control means (not shown) that manage the viscosity of the liquid product during its flow to and storage in the reservoir 12 and also during its flow through the dosing circuit to the internal mixer. Such temperature control means may be selected from header pipes, water circulation tracking devices and/or from equivalents known to a person skilled in the art.

Depending on the mixture selected for mixing in the internal mixer, each liquid product is dosed upon exiting its reservoir. The dosed liquid product is conveyed through at least one product conduit 16 with a predetermined diameter. The product conduit 16 carries a precise amount of liquid product, together with a dosing means that directly measures a mass and density of the liquid product dosed from the reservoir 12 and transported to the internal mixer on standby (not shown).

The dosing means includes one or more pumps 18 arranged downstream of the reservoir 12, each pump having a variable speed according to a liquid product dosage provided for the selected rubber mixing recipe. The speed of pump 18 is controlled, allowing the injection of the liquid product to be optimized and avoiding overpressure. At the end of the dosing cycle of the mixing cycle, it is also possible to reduce the flow rate of the dosed liquid product, making it possible to be more precise in relation to the target value of the dosed liquid product. It is understood that the pump 18 may be selected, from one or more positive displacement pumps (for example, peristaltic pumps, eccentric rotor pumps, diaphragm pumps, piston pumps, gear pumps and their equivalents).

The dosing means further includes a mass flow meter (or "flow meter") 20 arranged functionally downstream of the pump 18 to directly measure the mass and density of the liquid product dosed from the reservoir 12 and conveyed to the mixer (in this description, the "measure" or a "measurement" of the dosed liquid product refers to a measurement of its mass and/or density, and the or a "measured liquid product" refers to a dosed liquid product having its mass and/or density measured by the dosing means). The product conduit 16 provides continuous delivery of the dosed liquid product from the pump 18 to the flow meter 20. The flow meter 20 is selected from known control means to monitor the flow of liquid product through the product conduit 16. In embodiments of the dosing system 10, the mass flow meter 20 includes a Coriolis type flow meter positioned downstream of the pump 18.

In addition, the dosing system 10 includes a check valve 22 that is installed upstream of the flow meter 20 in order to maintain the pressure of the dosing system 10 at the end of a dosing cycle. Thus, the dosed liquid product does not flow back to the reservoir 12 and no product-free zone is created in the dosing circuit. During the next dosing cycle, there is no loss of time and precision due to possible dead zones. The non-return valve 22 serves to control the pressure in the dosing circuit and particularly to prevent damage due to excessive pressure. In addition, in the case of highly viscous products, this non-return valve 22 is also used to carry out a recirculation cycle in the dosing circuit, allowing the reset of the ideal temperature of the dosing circuit after a long period of non-use of the dosing system 10.

In addition, the dosing circuit pressure maintenance also has a second function by checking the dosing circuit for leaks, particularly downstream of the flow meter. Any downstream leakage of the liquid product will result in an incorrect dosing of the liquid product, as the leaked product is not injected into the internal mixer. In this case, the flow meter 20 gives a flow rate that does not correspond to the quantity of liquid product that has entered the mixer. In any case, the pressure is detected by a pressure sensor 24 installed downstream of the flow meter 20. By monitoring the evolution of the pressure in the dosing circuit between consecutive mixing cycles, it is thus possible to see if this pressure decreases, which means that a leak is present.

The dosing system 10 also includes a safety valve 28. The safety valve 28 is automatically activated when the pressure in the dosing circuit increases to a predetermined pressure, in order to open the safety valve 28 and discharge the liquid product (or associated steam or gas). When the pressure drops to the pre-set value, the safety valve is closed again.

The measured liquid product is directed either to the internal mixer or to a container that will then allow the liquid product to be checked. In the first case where the measured liquid product is directed to the internal mixer, a first switching valve 30 directs the measured liquid product to a mixing injector 32 in order to introduce different liquid products of mixed rubber mixture into a chamber of an internal mixer in which the mixing injector is mounted. The mixing injector 32 can be selected from commercially available devices, including multi-channel injectors (for example, of the type offered by the company Zeppelin Systems or of the type described in the Applicant's application FR1911828).

In the second case where the measured liquid product is directed to a container that will then allow the liquid product to be checked, a second switching valve 34 directs the measured liquid product to an injector of a sampling device (for example, a sampling injector 36) in order to take mass samples of the measured liquid product. The sampling injector 36 delivers mass samples automatically, enabling the quality of the measured liquid product to be checked regularly by weighing it on a calibrated balance and to check any drift in its measurement (as done, for example, by a known sampling unit 38).

It is understood that one or more control solutions can be installed in the dosing system 10 in order to compensate for any system failure. In order to ensure optimal performance of the dosing system 10, an encoder of the pump motor 18 can also be used to ensure that the pump has operated properly and has attained a number of revolutions close to the expected number. The dosing system 10 (or a system that incorporates the dosing system 10) can be trained to recognize representative values of the liquid product entering the mixer (e.g., mass, density and viscosity values) and to make a comparison with target values. The dosing system 10 (or an installation that incorporates the dosing system 10) can also be trained to recognize representative values of the mixture exiting the mixer (e.g., temperature and viscosity values) and to make a comparison with target values. This machine training includes the recognition of a non-equivalence between the compared values. Each step of the training may include a classification generated by self-learning means. This classification may include, the raw material parameters of the selected mixing recipe, the measured liquid product parameters (including the data assigned to the flow meter 20), the duration of the mixing cycles and the values expected at the end of a current mixing cycle. By also analyzing the quantity of liquid product actually injected in relation to the target value, the dosing system 10 will perform a self-learning cycle and will correct the volumes of liquid products dosed. This correction can be done systematically (for example, every two, three or more mixing cycles) but it is not necessarily done every cycle.

The dosing system 10 can also include a detection system that includes at least one dosing sensor. The detection system is used to perform detection and to generate one or more signals indicating the actual dosage of the dosed liquid product. The detection system includes the sensors to detect an actual dosage from the reservoir 12.

The dosing system 10 may also include a monitoring system that is configured to receive the detected signals (for example, the signals corresponding to the dosed liquid product flow rate) and to send one or more proportionate control signals. The monitoring can be continuous or intermittent so that the control signals effect a real-time adjustment of the liquid product dosing.

The monitoring system may include at least one programmable logic controller (or "PLC" in English) 40 communicating with the dosing system 10. The PLC 40 may have data programmed into it for a plurality of rubber mixtures, each with a unique mixing and dosing cycle setting. The data can have respective liquid product dosages set so that the actual dosage of a detected liquid product can be compared to it. Additional data may include, a predetermined liquid product dosage to be delivered to the mixture during a mixing and dosing cycle, a target temperature, and a target viscosity of the rubber mixture after an elapsed time. Using this data, the monitoring system can be configured to receive the detected signals and make a corresponding adjustment. All or part of the monitoring system can be housed in a central control center. All or part of the monitoring system can be remotely controlled via a network.

Referring again to Figure 1, a detailed description is given of an exemplary dosing cycle of the invention. The dosing cycle is part of a rubber mixing process including a step of injecting the liquid products, measured during the dosing cycle, into the internal mixer through the mixing injector 32. During this step, the liquid products are dosed according to the selected rubber mixing recipe. During the dosing cycle, the safety valve 28 remains closed except to allow a discharge in case of overpressure.

The dosing cycle of the invention includes a step of feeding a liquid product from the reservoir 12. During this step, the selected liquid product is stored in the reservoir 12 at least at the minimum level N_{MIN}, and the switching valve 26 remains closed. During this step, a precise mass of liquid product is conveyed in the dosing circuit from the reservoir 12 to the pump 18 (by "circuit" is meant the product conduit 16, the pump 18, the flow meter 20, the mixing injector 32 and the sampling injector 36). In all embodiments of the dosing cycle, the speed of the pump 18 can be variable during the dosing cycle depending upon the liquid product dosing intended for the current dosing cycle.

The dosing cycle also includes a step of feeding the liquid product from the pump 18 to the flow meter 20 in order to directly measure the mass and the density of the liquid product dosed from the reservoir 12. In embodiments of the dosing system 10, this step includes a step of comparing the data obtained from the flow meter 20 with the target values of mass and density of the measured liquid product. If the comparison indicates non-equivalence between the actual data and the target values, the speed of the pump 18 is adjusted in order to correct the dose of the liquid product from the reservoir 12.

The dosing cycle also includes a step for detecting the pressure in the dosing circuit by the pressure sensor 24. If the pressure detection indicates a leak (i.e., the pressure decreases during the current dosing cycle), this step includes the step of closing the check valve 22. The check valve 22 remains closed until the pressure sensing indicates no leakage. If the pressure sensing indicates no leakage, the cycle continues to the next step.

The dosing cycle also includes a step of routing the measured liquid product from the flow meter 20 to the mixing injector 32 in order to introduce the measured liquid product into the internal standby mixer. During this step, the first switching valve 30 is opened and the second switching valve 34 is closed. The mixing injector 32 delivers the measured liquid product until the measured liquid product mass is reached.

In embodiments of the dosing cycle that include liquid product control, this step includes a step of delivering the measured liquid product from the flow meter 20 to the sampling injector 36 in order to take at least one mass sample of the measured liquid product. During this step, the first switching valve 30 is closed and the second switching valve 34 is open. The sampling injector 36 performs the transfer of a mass of liquid product to the sampling unit 38 that is sufficient to validate that the mass and/or density of the dosed liquid product corresponds to the requested mass and/or density.

It is understood that one or more steps of the dosing cycle of the invention can be carried out iteratively. It is also understood that one or several reservoirs can be associated in a dosing circuit. It is further understood that one or more dosing systems 10 may be installed in a rubber production installation in which the rubber mixtures are produced.

The dosing cycle performed by the dosing system 10, as shown in the following example (which is shown as an example only), can be adjusted according to the unique properties of the rubber mixture recipe incorporating the dosed liquid products.

### EXAMPLE:

The setpoint of a dosage of a liquid product selected for a rubber mixing recipe is considered. Several dosing cycles are performed following the setpoint value to get closer to the target value (V to V).
V to V = 100 kg
Setpoint = 100 kg

The last three (3) values of the liquid product are averaged, and the setpoint value is modified so as to approach the value V to V in the next dosing cycle.

**[Table 1]**

| | |
|---|---|
| Dose 1 | 97 |
| Dose 2 | 99 |
| Dose 3 | 97 |
| Average dose | 97.6 |
| New setpoint | 102.4 |

All units are in kg.

One or more mixing processes may be considered as part of a complete mixing process incorporating the dosing cycle of the invention. The mixer receives the measured liquid product and implements a mixing process therefrom. The mixing process may be a "continuous" process, i.e., a process or any part of a process in which all steps can be performed without interruption. Continuous processes eliminate the need for intermediate steps and thus allow for a variety of industrial applications (e.g., the production of various rubber mixtures for tire production).

All or part of the mixing and dosing process can be done by PLC control and can include pre-programming of gestion information. For example, an adjustment of the dosing process can be associated with the mixture that is supplied to the internal mixer, including the properties of the liquid products and the properties of the mixture coming out of the mixer. This setting can be used to prevent liquid products from being dispensed during one or more dosing cycles.

For all implementations of the dosing system 10, at least part of an integrated monitoring system could be provided in a portable device such as a mobile network device (e.g., cell phone, laptop computer, network-attached portable device(s), including "augmented reality" and/or "virtual reality" devices, network-attached wearable clothing and/or any combination and/or equivalent).

In embodiments of the invention, the dosing system 10 and/or a part thereof may receive voice commands or other audio data representing, for example, deviations between predicted doses of liquid products and actual detected doses. A command includes a request for the current status of a mixing cycle (including the current status of the mixing and dosing processes performed during the current cycle). A generated response can be represented audibly, visually, tactile (e.g., using a haptic interface), virtually, augmented and/or combinations and equivalents.

In certain embodiments of the invention, the dosing system 10 (and/or an installation incorporating the dosing system 10) may incorporate a sensor or sensors that obtain status data. The status data obtained may be entered into a "blockchain" associated with dosing system 10 (and/or an installation incorporating dosing system 10). It is understood that a "blockchain" is a database that contains the history of all exchanges between its users since its creation. This database is secured and distributed by its various users, without intermediaries, which allows each one to check the validity of the chain. A "blockchain" can be public or private.

The invention preserves all the advantages of a pump associated with a measuring device. At the same time, the invention adapts to industrial constraints that require that dosing systems be efficient in terms of precise flow rate for all types of mixtures. The disclosed invention can also ensure the production of mixtures of more and more different natures.

The terms "at least one" and "one or more" are used interchangeably. Ranges that are presented as "between a and b" include the values "a" and "b".

## Claims

1. A dosing system (10) that performs mass control of a dosed amount of liquid product introduced into a chamber of an internal mixer that performs rubber mixing processes, the dosing system comprises:
- at least one reservoir (12) that stores a liquid product between a minimum level (N_{MIN}) and a maximum level (N_{MAX}) wherein a sensor controls the level of liquid product arriving at the reservoir (12) between the minimum level (N_{MIN}) and the maximum level (N_{MAX}) therein;
- at least one product conduit (16) of a predetermined diameter that conveys a dosed amount of liquid product from the reservoir (12) to the internal mixer;
- a dosing means that directly measures a mass and density of a liquid product dosed from the reservoir (12) and conveyed to the internal mixer, the dosing means comprising:
- at least one pump (18) disposed downstream of the reservoir (12), the pump (18) having a variable speed in accordance with an intended liquid product dosage; and
- a mass flow meter (20) arranged downstream of the pump (18);
- a mixing injector (32) disposed downstream of the dosing means for introducing different liquid products from a mixed rubber mixture into an internal mixer chamber in which the mixing injector (32) is mounted, with a first switching valve (30) that directs a liquid product measured by the dosing means to the mixing injector (32);
- a pressure sensor (24) installed downstream of the dosing means to detect the pressure of a dosing circuit comprising the product conduit (16), the reservoir (12), the dosing means and the mixing injector (32) and
- a non-return valve (22) installed upstream of the dosing means in order to maintain the dosing system under pressure at the end of a dosing cycle carried out by the dosing system; the dosing system (10) is **characterized in that** :
- at least one conveyance conduit (14) that conveys the liquid product from a source of the liquid product corresponding to the reservoir (12), the conveyance conduit (14) terminating at an outlet (14a) that descends below the minimum level (N_{MIN}) of liquid product stored in the reservoir (12).

2. The dosing system (10) of claim 1, further comprising:
- a sampling injector (36) that is part of the dosing circuit and that is arranged downstream of the dosing means for taking mass samples of the measured liquid product; and
- a second switching valve (34) that directs the measured liquid product to the sampling injector (36).

3. The dosing system (10) of claim 2, in which at least one of the mixing injector (32) and the sampling injector (36) comprises a multi-way injector.

4. The dosing system (10) of any one of claims 1 to 3, in which the mass flow meter (20) comprises a Coriolis-type flow meter.

5. A dosing cycle performed by the dosing system (10) of any one of claims 1 to 4, comprising the following steps:
- a step of sensing a level of the liquid product arriving at the reservoir (12) to ensure that it is filled between a minimum level (N_{MIN}) and a maximum level (N_{MAX});
- a step of delivery of the liquid product from the reservoir (12), during which an intended mass of liquid product is delivered from the reservoir (12) to the pump (18);
- a step of conveying the liquid product from the pump (18) to the dosing means for directly measuring the mass and density of the dosed liquid product from the reservoir (12);
- a step of detecting the pressure in the dosing circuit by means of the pressure sensor (24), this step includes the step of closing the non-return valve (22) until the pressure sensor indicates no leakage and
- a step of conveying the measured liquid product from the dosing means to the mixing injector (32) in order to introduce the measured liquid products into the internal mixer.

6. The dosing cycle of claim 5, further comprising a step of comparing data obtained from the dosing means with target values of mass and density of the measured liquid product.

7. The dosing cycle of claim 5 or claim 6, further comprising a step of sampling the measured liquid product.

8. The dosing cycle of any one of claims 5 to 7, wherein the steps of the dosing cycle are performed iteratively.

9. A rubber mixing process comprising the dosing cycle of any of claims 5 to 8.

## Patentansprüche

1. Dosiersystem (10), das Massesteuerung einer dosierten Menge von flüssigem Produkt durchführt, das in eine Kammer eines Innenmischers eingeführt wird, der Kautschukmischverfahren durchführt, wobei das Dosiersystem umfasst:
- wenigstens ein Reservoir (12), das ein flüssiges Produkt zwischen einem Mindestniveau (N_{MIN}) und einem Höchstniveau (N_{MAX}) enthält, wobei ein Sensor das Niveau von flüssigem Produkt, das in dem Reservoir ankommt (12), zwischen das Mindestniveau (N_{MIN}) und das Höchstniveau (N_{MAX}) darin steuert;
- wenigstens eine Produktleitung (16) mit einem vorgegebenen Durchmesser, die eine dosierte Menge an flüssigem Produkt von dem Reservoir (12) zu dem Innenmischer befördert;
- eine Dosiereinrichtung, die direkt eine Masse und Dichte eines flüssigen Produkts misst, das aus dem Reservoir (12) dosiert und zu dem Innenmischer befördert wird, wobei die Dosiereinrichtung umfasst:
- wenigstens eine Pumpe (18), die stromabwärts bezogen auf das Reservoir (12) angeordnet ist, wobei die Pumpe (18) eine variable Geschwindigkeit, die einer vorgesehenen Dosierung von flüssigem Produkt entspricht, aufweist; und
- einen Massendurchflussmesser (20), der stromabwärts bezogen auf die Pumpe (18) angeordnet ist;
- einen Mischinjektor (32), der stromabwärts bezogen auf die Dosiereinrichtung angeordnet ist, zum Einführen verschiedener flüssiger Produkte aus einem gemischten Kautschukgemisch in eine Innenmischerkammer, in der der Mischinjektor (32) montiert ist, mit einem ersten Schaltventil (30), das ein von der Dosiereinrichtung abgemessenes flüssiges Produkt zu dem Mischinjektor (32) führt;
- einen Drucksensor (24), der stromabwärts bezogen auf die Dosiereinrichtung eingerichtet ist, zum Erfassen des Drucks eines Dosierkreises, der die Produktleitung (16), das Reservoir (12), die Dosiereinrichtung und den Mischinjektor (32) umfasst, und
- Einwegventil (22), das stromaufwärts bezogen auf die Dosiereinrichtung eingerichtet ist, um das Dosiersystem an dem Ende eines von dem Dosiersystem ausgeführten Dosierzyklus unter Druck zu halten; wobei das Dosiersystem (10) **dadurch gekennzeichnet ist, dass**:
- wenigstens eine Förderleitung (14) das flüssige Produkt von einer Quelle des flüssigen Produkts, die dem Reservoir (12) entspricht, befördert, wobei die Förderleitung (14) an einem Auslass (14a) endet, der unter dem Mindestniveau (N_{MIN}) von in dem Reservoir (12) enthaltenem flüssigem Produkt liegt.

2. Dosiersystem (10) gemäß Anspruch 1, ferner umfassend:
- einen Probenahmeinjektor (36), der Teil des Dosierkreises ist und der stromabwärts bezogen auf die Dosiereinrichtung angeordnet ist, zum Nehmen von Masseproben des abgemessenen flüssigen Produkts; und
- ein zweites Schaltventil (34), das das abgemessene flüssige Produkt zu dem Probenahmeinjektor (36) führt.

3. Dosiersystem (10) gemäß Anspruch 2, wobei wenigstens einer von dem Mischinjektor (32) und dem Probenahmeinjektor (36) einen Mehrweginjektor umfasst.

4. Dosiersystem (10) gemäß einem der Ansprüche 1 bis 3, wobei der Massendurchflussmesser (20) einen Durchflussmesser vom Coriolis-Typ umfasst.

5. Dosierzyklus, durchgeführt von dem Dosiersystem (10) gemäß einem der Ansprüche 1 bis 4, umfassend die folgenden Schritte:
- einen Schritt des Erfassens eines Niveaus des flüssigen Produkts, das bei dem Reservoir (12) ankommt, um zu gewährleisten, dass es zwischen ein Mindestniveau (N_{MIN}) und ein Höchstniveau (N_{MAX}) eingefüllt wird;
- einen Schritt des Abgebens des flüssigen Produkts aus dem Reservoir (12), während dessen eine vorgesehene Masse an flüssigem Produkt von dem Reservoir (12) zu der Pumpe (18) abgegeben wird;
- einen Schritt des Beförderns des flüssigen Produkts von der Pumpe (18) zu der Dosiereinrichtung zum direkten Messen der Masse und Dichte des dosierten flüssigen Produkts aus dem Reservoir (12);
- einen Schritt des Erfassen des Drucks in dem Dosierkreis mithilfe des Drucksensors (24), wobei dieser Schritt den Schritt des Schließens des Einwegventils (22), bis der Drucksensor kein Ausfließen anzeigt, einschließt, und
- einen Schritt des Beförderns des abgemessenen flüssigen Produkts aus der Dosiereinrichtung zu dem Mischinjektor (32), um die abgemessenen flüssigen Produkte in den Innenmischer einzuführen.

6. Dosierzyklus gemäß Anspruch 5, ferner umfassend einen Schritt des Vergleichens von mit der Dosiereinrichtung erhaltenen Daten mit Zielwerten von Masse und Dichte des abgemessenen flüssigen Produkts.

7. Dosierzyklus gemäß Anspruch 5 oder Anspruch 6, ferner umfassend einen Schritt der Probenahme an dem abgemessenen flüssigen Produkt.

8. Dosierzyklus gemäß einem der Ansprüche 5 bis 7, wobei die Schritte des Dosierzyklus iterativ durchgeführt werden.

9. Kautschukmischverfahren, umfassend den Dosierzyklus gemäß einem der Ansprüche 5 bis 8.

## Revendications

1. Un système de dosage (10) qui réalise un contrôle massique d'une quantité dosée de produit liquide introduit dans une chambre d'un mélangeur interne qui réalise des processus de mélangeage de caoutchouc, le système de dosage comprenant :
- au moins un réservoir (12) qui stocke un produit liquide entre un niveau minimum (N_{MIN}) et un niveau maximum (N_{MAX}) dans lequel un capteur contrôle le niveau de produit liquide arrivant au réservoir (12) entre le niveau minimum (N_{MIN}) et le niveau maximum (N_{MAX}) ;
- au moins un conduit de produit (16) d'un diamètre prédéterminé qui achemine un quantité de produit liquide dosé depuis le réservoir (12) vers le mélangeur interne ;
- un moyen de dosage qui mesure directement une masse et une densité d'un produit liquide dosé depuis le réservoir (12) et transporté vers le mélangeur interne, le moyen de dosage comprenant :
- au moins une pompe (18) disposée en aval du réservoir (12), la pompe (18) ayant une vitesse variable en fonction d'un dosage de produit liquide prévu ; et
- un débitmètre massique (20) disposé en aval de la pompe (18);
- un injecteur de mélangeage (32) disposé en aval du moyen de dosage pour introduire des produits liquides différents d'un mélange de caoutchouc mélangé dans une chambre du mélangeur interne dans lequel l'injecteur de mélangeage (32) est monté, avec un premier clapet de commutation (30) qui gère un produit liquide mesuré par le moyen de dosage vers le injecteur de mélangeage (32) ; et
- un capteur de pression (24) installé en aval du moyen de dosage pour détecter la pression d'un circuit de dosage comprenant le conduit de produit (16), le réservoir (12), le moyen de dosage et l'injecteur de mélangeage (32) ;
- un clapet anti-retour (22) installé en amont du moyen de dosage afin de maintenir le système de dosage en pression en fin d'un cycle de dosage réalisé par le système de dosage, le système de dosage (10) étant **caractérisé en ce qu'**il comprend :
- au moins un conduit d'acheminement (14) qui transporte un produit liquide en provenance d'une source du produit liquide correspondant au réservoir (12), le conduit d'acheminement (14) se terminant à une sortie (14a) qui descend en dessous du niveau minimum (N_{MIN}) de produit liquide stocké dans le réservoir (12) ;

2. Le système de dosage (10) de la revendication 1, comprenant en outre :
- un injecteur d'échantillonnage (36) qui fait partie du circuit de dosage et qui est disposé en aval du moyen de dosage pour prendre des échantillons massiques de produit liquide mesuré ; et
- un deuxième clapet de commutation (34) qui gère le produit liquide mesuré vers l'injecteur d'échantillonnage (36).

3. Le système de dosage (10) de la revendication 2, dans lequel au moins un entre l'injecteur de mélangeage (32) et l'injecteur d'échantillonnage (36) comprend un injecteur multivoie.

4. Le système de dosage (10) de l'une quelconque des revendications 1 à 3, dans lequel le débitmètre massique (20) comprend un débitmètre de type Coriolis.

5. Un cycle de dosage réalisé par le système de dosage (10) de l'une quelconque des revendications 1 à 4, comprenant les étapes suivantes :
- une étape de mesure du niveau du liquide arrivant au réservoir (12) pour s'assurer que le remplissage est entre un niveau minimum (N_{MIN}) et un niveau maximum (N_{MAX}) ;
- une étape de mise en acheminement un produit liquide en provenance du réservoir (12), pendant laquelle une masse prévue de produit liquide est acheminée depuis le réservoir (12) vers la pompe (18) ;
- une étape d'acheminement du produit liquide de la pompe (18) vers le moyen de dosage pour mesurer directement la masse et la densité du produit liquide dosé au réservoir (12);
- une étape de détection de la pression du circuit de dosage réalisée par le capteur de pression (24), cette étape incluant une étape de fermeture d'un clapet anti-retour (22) jusqu'à ce que le capteur de pression (24) n'indique aucune de fuite; et
- une étape d'acheminement de produit liquide mesuré en provenance du moyen de dosage vers l'injecteur de mélangeage (32) pour introduire les produits liquides mesurés dans le mélangeur interne.

6. Le cycle de dosage de la revendication 5, comprenant en outre une étape de comparaison des données obtenues du moyen de dosage et des valeurs ciblées de masse et de la densité de produit liquide mesuré.

7. Le cycle de dosage de la revendication 5 ou de la revendication 6, comprenant en outre une étape d'échantillonnage de produit liquide mesuré.

8. Le cycle de dosage de l'une quelconque des revendications 5 à 7, dans lequel les étapes du cycle de dosage sont réalisées de manière itérative.

9. Un processus de mélangeage de caoutchouc comprenant le cycle de dosage de l'une quelconque des revendications 5 à 8.
